# FASCICULE DE BREVET EUROPEEN

(11) **EP 1 877 277 B1**
(45) Date de publication et mention de la délivrance du brevet: **19.11.2008**
(21) Numéro de dépôt: 06743756.6
(22) Date de dépôt: 27.04.2006
(51) Int. Cl.: B60Q 1/04

(54) **DISPOSITIF DE LIAISON ENTRE UN BLOC OPTIQUE ET UN ELEMENT DE CAISSE DE VEHICULE AUTOMOBILE, BLOC AVANT, ET VEHICULE AUTOMOBILE ASSOCIÉS**
VERBINDERVORRICHTUNG ZWISCHEN EINER SCHEINWERFEREINHEIT UND EINEM FAHRGESTELLELEMENT AN EINEM KRAFTFAHRZEUG, FRONTSCHEINWERFEREINHEIT UND ENTSPRECHENDES KRAFTFAHRZEUG
CONNECTOR DEVICE BETWEEN A HEADLIGHT UNIT AND A CHASSIS MEMBER ON A MOTOR VEHICLE A FRONT LIGHT UNIT AND CORRESPONDING MOTOR VEHICLE

(30) Priorité: 04.05.2005 FR 0504584
(43) Date de publication de la demande: 16.01.2008
(73) Titulaire: Faurecia Bloc Avant, 92000 Nanterre (FR)
(72) Inventeur: BIERJON, Didier, F-25400 Audincourt (FR); DIAW, Baye, F-25420 Courcelles Les Montbeliard (FR); CORVASCE, Raymond, F-25150 Pont de Roide (FR)
(74) Mandataire: Blot, Philippe Robert Emile
(86) Numéro de dépôt international: PCT/FR2006/000947
(87) Numéro de publication internationale: WO 2006/117455

(56) Documents cités:
- EP-A- 1 048 521
- EP-A- 1 400 405
- EP-A- 1 502 841
- FR-A- 2 837 438
- PATENT ABSTRACTS OF JAPAN vol. 2000, no. 23, 10 février 2001 (2001-02-10) -& JP 2001 158285 A (TOYOTA MOTOR CORP), 12 juin 2001 (2001-06-12)

## Description

La présente invention concerne un dispositif de liaison entre un bloc optique et un élément de caisse de véhicule automobile, du type comprenant :
- un support de bloc optique déplaçable lors d'un choc frontal entre une position avancée et une position reculée ;
- des moyens de guidage longitudinal du déplacement du support suivant un axe sensiblement longitudinal de sa position avancée à sa position reculée ;
- des moyens de guidage latéral du support pour guider le support latéralement vers l'extérieur lors de son déplacement de sa position avancée à sa position reculée.

On connaît de FR-A-2 837 438 un dispositif du type précité, dans lequel la partie arrière d'un bloc optique est reliée à un longeron par une biellette d'articulation. La partie avant du bloc optique est munie d'un pion de coulissement qui est reçu dans une coulisse montée solidaire du longeron. Lors d'un choc frontal contre le véhicule, un tel dispositif assure un recul de la partie frontale du bloc optique en vue de satisfaire les critères de réparabilité du bloc optique, et simultanément, un déplacement de la partie arrière du bloc optique vers l'extérieur par rapport au véhicule, afin de limiter l'impact lors d'un choc frontal contre un piéton.

Un tel dispositif ne donne pas entière satisfaction. En effet, le montage du dispositif précité sur la caisse du véhicule est fastidieux. Le positionnement relatif des éléments de carrosserie disposés autour du bloc optique doit être très précis.

Un but de l'invention est d'obtenir un dispositif de liaison entre un bloc optique et un élément de caisse de véhicule automobile qui présente une réparabilité et un comportement en cas de choc piéton satisfaisants, tout en étant simple à monter sur le véhicule.

A cet effet, l'invention a pour objet un dispositif du type précité, caractérisé en ce que les moyens de guidage longitudinal comprennent un organe de liaison déformable longitudinalement lors du choc, l'organe de liaison s'étendant entre un bord avant solidaire du support et un bord arrière de fixation à l'élément de caisse.

Le dispositif selon l'invention peut comprendre l'une ou plusieurs des caractéristiques suivantes, prises isolément ou suivant toutes combinaisons techniquement possibles.
- les moyens de guidage latéral sont formés par l'organe de liaison déformable ;
- les moyens de guidage latéral comprennent des moyens de pivotement du support autour d'un axe sensiblement vertical, les moyens de pivotement présentant une extrémité avant articulée au support et une extrémité arrière d'articulation à l'élément de caisse ;
- le support est réalisé en un matériau déformable, l'organe de liaison étant venu de matière avec le support ;
- les moyens de pivotement sont venus de matière avec le support, les moyens de pivotement étant articulés au support par une charnière ;
- le dispositif comprend une plaque terminale de fixation à l'élément de caisse, le bord arrière de l'organe de liaison et l'extrémité arrière des moyens de pivotement étant liés à la plaque terminale ;
- dans la position avancée, les moyens de pivotement sont inclinés latéralement vers l'extérieur par rapport à l'axe longitudinal depuis leur extrémité arrière vers leur extrémité avant ; et
- le bord avant de l'organe de liaison est disposé à l'avant de l'extrémité avant des moyens de pivotement.

L'invention a également pour objet un bloc avant de véhicule automobile, caractérisé en ce qu'il comprend :
- un élément de caisse ;
- un dispositif tel que défini ci-dessus;
- un bloc optique solidaire du support, l'extrémité arrière des moyens de pivotement et le bord arrière de l'organe de liaison étant montés sur l'élément de caisse.

L'invention a également pour objet un véhicule automobile caractérisé en ce qu'il comprend un bloc avant tel que défini ci-dessus.

L'invention sera mieux comprise à la lecture de la description qui va suivre, donnée uniquement à titre d'exemple, et faite en se référant aux dessins annexés, sur lesquels :
- la Figure 1 est une vue de trois-quarts face en perspective de l'extrémité avant droite d'un véhicule muni d'un premier dispositif de liaison selon l'invention :

- la Figure 2 est une vue en perspective de trois quart face du dispositif de liaison de la Figure 1 ;
- la Figure 3 est une vue de dessous du dispositif de la Figure 2 lors après un choc frontal contre le véhicule ; et
- la Figure 4 est une vue analogue à la Figure 2 d'un deuxième dispositif de liaison selon l'invention.

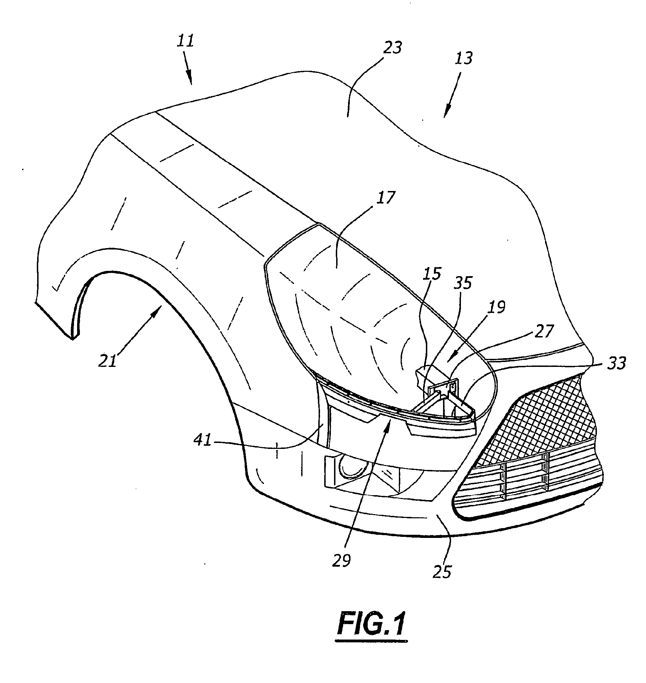

Les Figures 1 à 3 illustrent l'extrémité avant droite 11 d'un bloc avant d'un premier véhicule automobile 13 selon l'invention.

Dans tout ce qui suit, les orientations sont les orientations habituelles d'un véhicule automobile. Ainsi, les termes « avant », « arrière », « supérieur », « inférieur », « gauche », « droite » s'entendent par rapport au sens normal de circulation du véhicule et à la position d'un conducteur.

Comme illustré par la Figure 1, l'extrémité avant 11 comprend un longeron 15 solidaire de la caisse du véhicule, un bloc optique 17 et un dispositif de liaison 19 fixé sur le longeron 15 et supportant le bloc optique 17.

L'extrémité avant 11 comprend en outre des éléments de carrosserie, notamment une aile 21 disposée à l'arrière du bloc optique 17, un capot 23 disposé à gauche du bloc optique et un pare-chocs 25 disposé sous le bloc optique 17. Les éléments de carrosserie 21, 23, 25 affleurent extérieurement le bloc optique 17.

Le longeron 15 comprend à son extrémité avant un flasque transversal de fixation 27 qui reçoit notamment le dispositif de liaison 19.

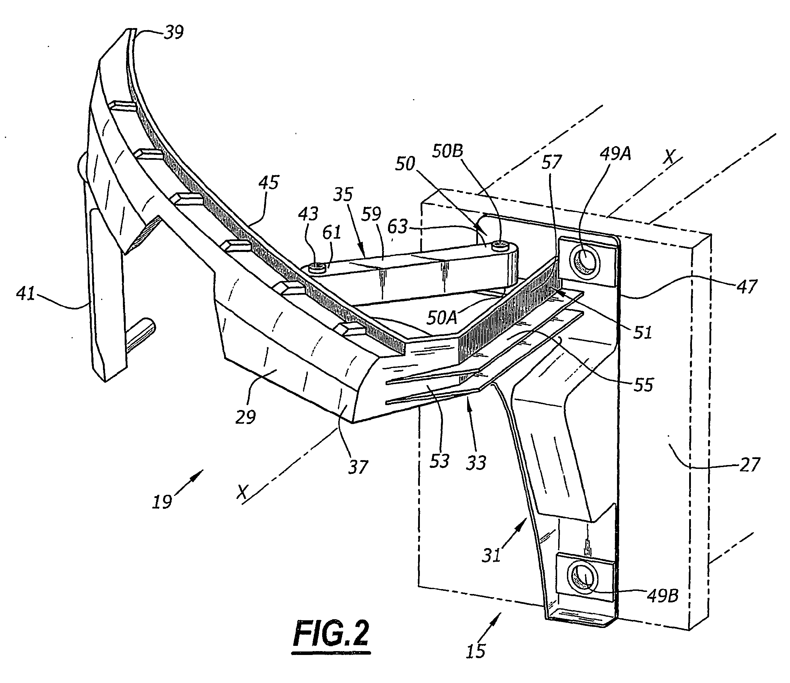

Comme illustré par la Figure 2, le dispositif de liaison 19 comprend un support de bloc optique 29 et une plaque terminale de fixation 31 sur le longeron 15. Le dispositif 19 comprend également un bras de liaison 33 déformable longitudinalement et une biellette de guidage latéral 35, disposés entre le support 29 et la plaque 31.

Dans cet exemple, le support 29, la plaque 31 et le bras de liaison 33 sont venus de matière.

Le support de bloc optique 29 est réalisé à base d'un matériau relativement souple. Il forme un bras sous feu galbé, qui s'étend sensiblement horizontalement entre une extrémité avant 37 en contact avec le pare-choc 25 et une extrémité arrière 39 de liaison avec l'aile 21.

Le support 29 comprend à son extrémité arrière 39 un montant 41 de liaison à l'aile qui fait saillie vers le bas et qui est fixé sur l'aile par des moyens de fixation fusibles (non représentés).

Le support 29 comprend par ailleurs, dans une partie avant, un pivot d'articulation avant 43 vertical placé en regard d'une surface arrière 45 du support 29.

La plaque terminale 31 de fixation s'étend dans un plan sensiblement transversal. Elle comprend, au voisinage de son bord droit 47, des orifices supérieur et inférieur de vissage 49A et 49B qui reçoivent des vis de fixation (non représentées) vissées sur le longeron 15.

La plaque terminale 31 est appliquée sur une surface avant du flasque de fixation 27.

La plaque 31 comprend en outre des moyens 50 d'articulation de la biellette 35 comprenant une plaque de support horizontal 50A et un pivot d'articulation arrière 50B.

La plaque 50A faits saillie à l'avant et à droite du bras 33 sensiblement au même niveau que ce bras 33. Le pivot arrière 50B s'étend sensiblement verticalement à partir de la plaque 50A en regard du pivot avant 43.

Le bras de liaison 33 s'étend sensiblement longitudinalement entre un bord arrière 51 solidaire d'une partie supérieure de la plaque 31 et un bord avant 53 solidaire de l'extrémité avant 37 du support 29.

Le bras 33 comprend deux nervures de renfort latérales 55 qui font saillie horizontalement à partir d'une surface gauche 57 du bras 33.

La biellette 35 est formée par une tige 59 réalisée en un matériau plus rigide que le matériau déformable dans lequel est réalisé le bras 33. La tige 59 délimite à ses extrémités avant 63 et arrière 61 des orifices qui reçoivent respectivement les pivots 43 et 50B.

Le pivot 43 est décalé latéralement vers l'extérieur par rapport au pivot 50B de sorte que la biellette 59 est inclinée vers l'extérieur du véhicule depuis son extrémité arrière 63 vers son extrémité-avant 61 par rapport à l'axe X-X'.

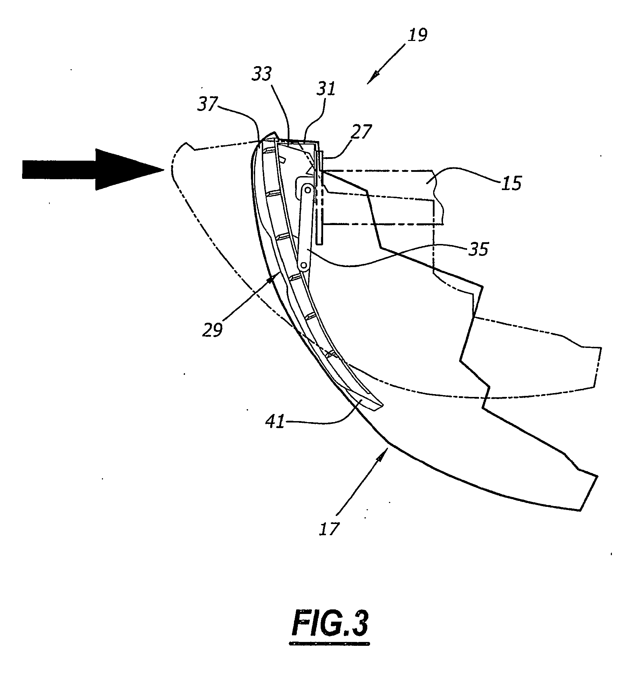

Le support 29 est déplaçable lors d'un choc frontal contre le véhicule entre une position avancée intérieure représentée sur la Figure 2, qu'il occupe en l'absence de choc contre le véhicule, et une position reculée extérieure représentée sur la Figure 3, qu'il occupe après le choc. Ces positions seront décrites plus bas.

Le fonctionnement du dispositif de liaison 19 selon l'invention va maintenant être décrit. En l'absence de choc frontal, le bras de liaison 33 s'étend sensiblement longitudinalement par rapport au véhicule. Le support 29 est alors maintenu dans une position avant intérieure de sorte que le bloc optique affleure les. éléments de carrosserie 21, 23, 25 disposés autour de lui.

La souplesse du support 29 et du bras 33, permet d'ajuster facilement le jeu de montage entre les éléments de carrosserie 21, 23, 25 et le bloc optique 17.

En l'absence de choc, l'extrémité avant 37 du bras 33 est située à l'écart de la plaque terminale 31, à l'avant de cette plaque 31.

Lors d'un choc frontal contre le véhicule, le bras de liaison 33 se déforme longitudinalement. Cette déformation absorbe une partie de l'énergie mécanique de choc, ce qui diminue les risques de blessure d'un piéton, si ce choc est provoqué par contact avec ce piéton.

La déformation longitudinale du bras 33 guide le déplacement de la partie avant du support 29 lors du choc sensiblement le long d'un axe longitudinal X-X'.

Par ailleurs, les moyens de fixation frangibles entre le montant 41 et l'aile 31 se rompent au début du choc.

Sous l'effet de la déformation du bras 33, l'extrémité avant 61 de la biellette 35 se déplace alors vers l'arrière et latéralement vers l'extérieur. Le déplacement de l'extrémité arrière 39 du support 29 du bloc optique vers l'extérieur est alors guidé par la biellette 35 et permet son pivotement latéral, comme illustré par la Figure 3.

Dans la position reculée, l'extrémité arrière 39 du support a pivoté vers l'extérieur et l'extrémité avant 37 du support est calée en appui contre la plaque terminale 31.

Le dispositif 19 permet donc de satisfaire simultanément les critères de réparabilité par un recul important du support 29 et de choc piéton par le pivotement du support 29 vers l'extérieur.

Ce résultat est obtenu par des moyens simples et peu coûteux, en simplifiant notablement le montage sur le véhiculé 13.

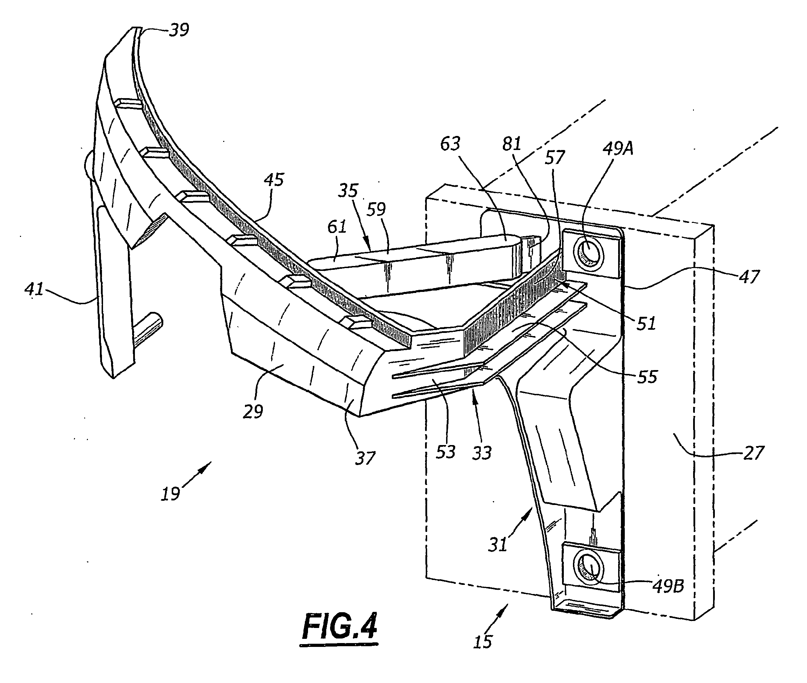

Dans la variante représentée sur la Figure 4, la biellette 35 est venue de matière avec le support 29, la plaque 31, et le bras de liaison 33. L'articulation entre la biellette 35 et le support 29 d'une part, et entre la biellette 35 et la plaque terminale 31 d'autre part, est réalisée par des charnières verticales 81 souples formées par des parois verticales amincies, de section inférieure à la section de la tige 59.

En variante, le bras de liaison 33 est conformé pour guider le support 29 suivant un axe longitudinal et pour le guider latéralement vers l'extérieur lors de son déplacement de sa position avancée à sa position reculée.

Le dispositif 19 est alors dépourvu de biellette 35, le bras de liaison 33 formant des moyens de guidage latéral et longitudinal du support 29.

La forme du bras de liaison 33 peut également être choisie pour permettre dans un premier temps un guidage longitudinal du support 29, puis dans un deuxième temps, un guidage latéral de ce support 29, lors de son déplacement de la position avancée à la position reculée.

## Revendications

1. Dispositif (19) de liaison entre un bloc optique (17) et un élément de caisse (15) de véhicule automobile, du type comprenant :
- un support (29) de bloc optique, déplaçable lors d'un choc frontal entre une position avancée et une position reculée ;
- des moyens (33) de guidage longitudinal du déplacement du support (29) suivant un axe sensiblement longitudinal (X-X') de sa position avancée à sa position reculée ;
- des moyens (35 ; 33) de guidage latéral du support (29) pour guider le support latéralement vers l'extérieur lors de son déplacement de sa position avancée à sa position reculée ;
**caractérisé en ce que** les moyens de guidage longitudinal comprennent un organe de liaison (33) déformable longitudinalement lors du choc, l'organe de liaison (33) s'étendant entre un bord avant (53) solidaire du support (29) et un bord arrière (51) de fixation à l'élément de caisse (15).

2. Dispositif (19) selon la revendication 1 **caractérisé en ce que** les moyens de guidage latéral sont formés par l'organe de liaison (33) déformable.

3. Dispositif (19) selon la revendication 1, **caractérisé en ce que** moyens de guidage latéral (35) comprennent des moyens de pivotement du support (29) autour d'un axe sensiblement vertical, les moyens de pivotement (35) présentant une extrémité avant (61) articulée au support (29) et une extrémité arrière (63) d'articulation à l'élément de caisse (15) ;

4. Dispositif (19) selon l'une quelconque des revendications 1 à 3, **caractérisé en ce que** le support (29) est réalisé en un matériau déformable, l'organe de liaison (33) étant venu de matière avec le support.

5. Dispositif (19) selon l'une des revendications 3 ou 4, **caractérisé en ce que** les moyens de pivotement sont venus de matière avec le support (29), les moyens de pivotement (35) étant articulés au support (29) par une charnière (81).

6. Dispositif (19) selon l'une quelconque des revendications 3 à 5, **caractérisé en ce qu'**il comprend une plaque terminale (31) de fixation à l'élément de caisse (15), le bord arrière (51) de l'organe de liaison (33) et l'extrémité arrière (63) des moyens de pivotement (35) étant liés à la plaque terminale (31).

7. Dispositif (19) selon l'une quelconque des revendications 3 à 6, **caractérisé en ce que** dans la position avancée, les moyens de pivotement (35) sont inclinés latéralement vers l'extérieur par rapport à l'axe longitudinal (X-X') depuis leur extrémité arrière (63) vers leur extrémité avant (61).

8. Dispositif (19) selon l'une quelconque des revendications 3 à 7, **caractérisé en ce que** le bord avant (53) de l'organe de liaison (33) est disposé à l'avant de l'extrémité avant (61) des moyens de pivotement (35).

9. Bloc avant (11) de véhicule automobile **caractérisé en ce qu'**il comprend :
- un élément de caisse (15) ;
- un dispositif (19) selon l'une quelconque des revendications précédentes ;
- un bloc optique (17) solidaire du support (29), l'extrémité arrière (63) des moyens de pivotement (35) et le bord arrière (51) l'organe de liaison (25) étant montés sur l'élément de caisse (15).

10. Véhicule automobile (13), **caractérisé en ce qu'**il comprend un bloc avant (11) selon la revendication 9.

## Claims

1. Connection device (19) between an optical unit (17) and a body element (15) of a motor vehicle, comprising:
an optical unit support (29), which is displaceable between an extended position and a retracted position in the event of a head-on impact;
means (33) for longitudinally guiding the displacement of the support (29) along a substantially longitudinal axis (X-X') from its extended position to its retracted position;
means (35; 33) for laterally guiding the support (29) to guide the support laterally outwards during its displacement from its extended position to its
retracted position;
**characterised in that** the longitudinal guidance means comprise a connection element (33), which is longitudinally deformable during the impact, said connection element (33) extending between a front edge (53) integral to the support (29) and a rear edge (51) for fastening to the body element (15).

2. Device (19) according to claim 1, **characterised in that** the lateral guidance means are formed by the deformable connection element (33).

3. Device (19) according to claim 1, **characterised in that** the lateral guidance means (35) comprise means for pivoting the support (29) around a substantially vertical axis, said pivoting means (35) having a front end (61) articulated to the support (29) and a rear end (63) for articulation to the body element (15).

4. Device (19) according to any one of claims 1 to 3, **characterised in that** the support (29) is made from a deformable material and the connection element (33) is formed in one piece with the support.

5. Device (19) according to one of claims 3 or 4, **characterised in that** the pivoting means are formed in one piece with the support (29) and the pivoting means (35) are articulated to the support (29) by means of a hinge (81).

6. Device (19) according to any one of claims 3 to 5, **characterised in that** it comprises an end plate (31) for fastening to the body element (15), wherein the rear edge (51) of the connection element (33) and the rear end (63) of the pivoting means (35) are connected to the end plate (31).

7. Device (19) according to any one of claims 3 to 6, **characterised in that** in the extended position, the pivoting means (35) are inclined laterally to the outside in relation to the longitudinal axis (X-X') from their rear end (63) to their front end (61).

8. Device (19) according to any one of claims 3 to 7, **characterised in that** the front edge (53) of the connection element (33) is disposed in front of the front end (61) of the pivoting means (35).

9. Front section (11) of a motor vehicle, **characterised in that** it comprises:
a body element (15);
a device (19) according to any one of the preceding claims;
an optical unit (17) integral to the support (29), wherein the rear end (63) of the pivoting means (35) and the rear edge (51) of the connection element (25) are mounted on the body element (15).

10. Motor vehicle (13), **characterised in that** it comprises a front section (11) according to claim 9.

## Patentansprüche

1. Verbindungsvorrichtung (19) zwischen einer Scheinwerfereinheit (17) und einem Karosserieelement (15) eines Kraftfahrzeugs, umfassend:
- einen Scheinwerfereinheithalter (29), der bei einem frontalen Stoß zwischen einer vorderen Stellung und einer zurückgesetzten Stellung beweglich ist;
- Mittel (33) zur Längsführung der Bewegung des Halters (29) in einer im Wesentlichen longitudinalen Achse (X-X') von seiner vorderen Stellung in seine zurückgesetzte Stellung;
- Mittel (35; 33) zur Längsführung des Halters (29), um den Halter bei seiner Bewegung von seiner vorderen Stellung in seine zurückgesetzte Stellung seitlich nach außen zu führen;
**dadurch gekennzeichnet, dass** die Längsführungsmittel ein bei einem Stoß in Längsrichtung verformbares Verbindungsorgan (33) umfassen, wobei das Verbindungsorgan (33) sich zwischen einem mit dem Halter (29) fest verbundenen vorderen Rand (53) und einem hinteren Rand (51) zur Befestigung an dem Karosserieelement (15) erstreckt.

2. Vorrichtung (19) nach Anspruch 1, **dadurch gekennzeichnet, dass** die Mittel zur seitlichen Führung von dem verformbaren Verbindungsorgan (33) gebildet sind.

3. Vorrichtung (19) nach Anspruch 1, **dadurch gekennzeichnet, dass** die Mittel (35) zur seitlichen Führung Mittel zum Verschwenken des Halters (29) um eine im Wesentlichen vertikale Achse umfassen, wobei die Schwenkmittel (35) ein am Halter (29) angelenktes vorderes Ende (61) und ein hinteres Ende (63) zur Anlenkung an dem Karosserieelement (15) aufweisen.

4. Vorrichtung (19) nach einem der Ansprüche 1 bis 3, **dadurch gekennzeichnet, dass** der Halter (29) aus einem verformbaren Werkstoff hergestellt ist, wobei das Verbindungsorgan (33) mit dem Halter einstückig ausgeführt ist.

5. Vorrichtung (19) nach einem der Ansprüche 3 oder 4, **dadurch gekennzeichnet, dass** die Schwenkmittel mit dem Halter (29) einstückig ausgeführt sind, wobei die Schwenkmittel (35) an dem Halter (29) durch ein Scharnier (81) angelenkt sind.

6. Vorrichtung (19) nach einem der Ansprüche 3 bis 5, **dadurch gekennzeichnet, dass** sie eine Endplatte (31) zur Befestigung an dem Karosserieelement (15) umfasst, wobei der hintere Rand (51) des Verbindungsorgans (33) und das hintere Ende (63) der Schwenkmittel (35) mit der Endplatte (31) verbunden sind.

7. Vorrichtung (19) nach einem der Ansprüche 3 bis 6, **dadurch gekennzeichnet, dass** die Schwenkmittel (35) in der vorderen Stellung bezüglich der Längsachse (X-X') von ihrem hinteren Ende (63) auf ihr vorderes Ende (61) zu seitlich nach außen geneigt sind.

8. Vorrichtung (19) nach einem der Ansprüche 3 bis 7, **dadurch gekennzeichnet, dass** der vordere Rand (53) des Verbindungsorgans (33) vor dem vorderen Ende (61) der Schwenkmittel (35) angeordnet ist.

9. Kraftfahrzeugfrontblock (11), **dadurch gekennzeichnet, dass** er umfasst:
- ein Karosserieelement (15);
- eine Vorrichtung (19) nach einem der vorhergehenden Ansprüche;
- eine mit dem Halter (29) fest verbundene Scheinwerfereinheit (17),
wobei das hintere Ende (63) der Schwenkmittel (35) und der hintere Rand (51) des Verbindungsorgans (25) an dem Karosserieelement (15) montiert sind.

10. Kraftfahrzeug (13), **dadurch gekennzeichnet, dass** es einen Frontblock (11) nach Anspruch 9 umfasst.
